# FASCICULE DE BREVET EUROPEEN

(11) **EP 1 029 761 B1**
(45) Date de publication et mention de la délivrance du brevet: **30.06.2004**
(21) Numéro de dépôt: 00400354.7
(22) Date de dépôt: 08.02.2000
(51) Int. Cl.: B60T 13/66, B60T 13/14, B60T 8/32, B60G 17/015

(54) **Système de freinage pour véhicule automobile à suspension hydropneumatique**
Bremsanlage für Kraftfahrzeuge mit hydropneumatischer Radaufhängung
Braking system for a motor vehicle with hydro-pneumatic suspension

(30) Priorité: 18.02.1999 FR 9902003
(43) Date de publication de la demande: 23.08.2000
(73) Titulaire: Peugeot Citroen Automobiles SA, 92200 Neuilly sur Seine (FR)
(72) Inventeur: Bailleux, François, 91400 Val D'Albian (FR)
(74) Mandataire: Berger, Helmut

(56) Documents cités:
- EP-A- 0 025 714
- EP-A- 0 628 459
- EP-A- 0 803 423
- FR-A- 2 597 413
- FR-A- 2 614 253
- FR-A- 2 750 652
- PATENT ABSTRACTS OF JAPAN vol. 1995, no. 02, 31 mars 1995 (1995-03-31) & JP 06 321191 A (MITSUBISHI HEAVY IND LTD), 22 novembre 1994 (1994-11-22)

## Description

L'invention concerne un véhicule automobile selon le préambule de la revendication 1.

On connaît déjà des systèmes de freinage de ce type, dans lesquels la pédale permet d'agir sur un doseur qui commande deux circuits de freinage correspondant respectivement aux roues avant et arrière, le plus souvent par l'intermédiaire d'un système d'anti-blocage des roues (ABS). Le doseur étant un système hydraulique, il est nécessaire d'avoir deux sources de pression, une pour chacun des deux circuits. Etant donné que les réglementations exigent qu'en cas de panne du système hydraulique on puisse encore donner quelques coups de frein, il faut avoir deux réserves de pression qui se présentent sous la forme d'accumulateurs.

Ces systèmes de freinage connus présentent l'inconvénient d'être complexes, coûteux, d'augmenter l'encombrement à l'intérieur du véhicule et de nécessiter des longueurs de canalisations importantes.

Le document FR-A-2 597 413, qui présente les caractéristiques du préambule de la revendication 1, est considéré comme l'état de la technique le plus proche.

La présente invention a pour but de pallier les inconvénients qui viennent d'être énoncés en proposant un système de freinage peu encombrant et ayant un très bon temps de réponse.

Ce but est atteint par l'objet de la revendication 1. Selon l'invention, la source de pression pour le freinage d'une roue est constituée par le liquide sous pression contenu dans l'élément de suspension associé à cette roue.

Selon l'invention, l'étrier de frein d'une roue du véhicule est relié par une canalisation à l'élément de suspension associé à cette roue par l'intermédiaire d'une électrovanne commandée par les moyens calculateurs de manière que l'électrovanne soit normalement et en permanence au moins partiellement ouverte. Selon une autre caractéristique de l'invention, l'électrovanne est plus proche de l'étrier de frein que de l'élément de suspension.

Selon encore une autre caractéristique de l'invention, l'électrovanne est intégrée à l'étrier de frein.

Selon encore une autre caractéristique, un capteur de position est associé à la pédale de frein et adapté pour convertir la position de la pédale en un signal électrique envoyé au calculateur pour la commande des électrovannes.

Selon encore une autre caractéristique, le calculateur et les électrovannes sont utilisables pour un système anti-blocage de roue et/ou pour la suspension.

Selon encore une autre caractéristique, le système de freinage comporte deux électrovannes pour réaliser une redondance de fonctionnement.

Selon encore une autre caractéristique, le système de freinage comporte des moyens de freinage de secours en cas de défaillance, ces moyens de secours comprenant un maître-cylindre relié à l'étrier de frein, avec interposition d'une électrovanne de secours.

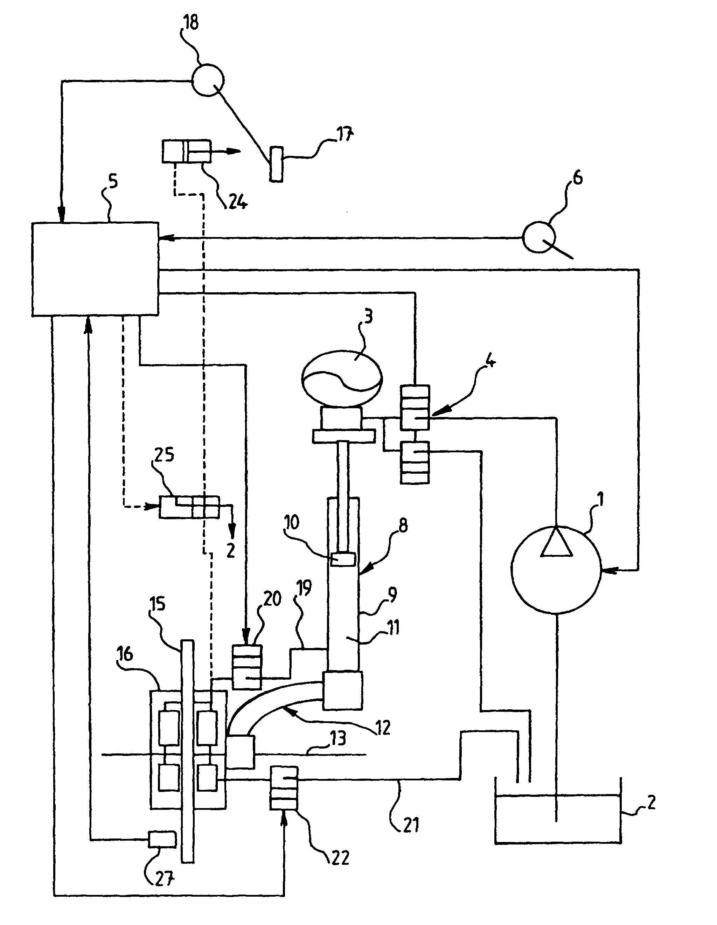

L'invention sera mieux comprise et d'autres buts, caractéristiques, détails et avantages de celle-ci apparaîtront plus clairement dans la description explicative qui va suivre faite en référence à la figure unique annexée donnée uniquement à titre d'exemple illustrant un mode de réalisation de l'invention.

Comme on le voit sur la figure, le système de freinage selon l'invention est conçu pour être associé et pour coopérer avec la suspension hydropneumatique du véhicule automobile qu'il équipe. Cette suspension comporte essentiellement une électro-pompe 1 aspirant du fluide d'un réservoir 2 et destinée à envoyer du fluide sous pression à une sphère de suspension 3. L'alimentation en fluide sous pression de la sphère 3 et le retour du fluide au réservoir 2 sont effectués par l'intermédiaire d'un dispositif d'électrovannes 4, sous la commande d'un calculateur 5 d'après des informations fournies par des capteurs de hauteur indiqués en 6. Une telle suspension est connue et par exemple décrite dans le brevet français N° 2 750 652 appartenant à la demanderesse.

Les sphères de suspension 3 communiquent avec les éléments de suspension 8 associés aux roues du véhicule et dont chacun est constitué essentiellement d'un cylindre 9 et d'un piston 10 monté coulissant dans le cylindre pour permettre la variation de la suspension du véhicule. Si celle-ci est trop basse, on augmente le volume de liquide 11 contenu dans le cylindre. Si la suspension est trop haute, on retire du liquide. Celui-ci passe alors par la tige creuse du piston et traverse un amortisseur avant de parvenir à la sphère de suspension 3. L'élément de suspension 8 est intégré au support de roue 12, l'axe de la roue étant indiqué en 13.

Le système de freinage comporte, associé à chaque roue, un disque de frein 15 et un étrier de frein 16 actionné en fonction de la position d'une pédale de frein 17, par l'intermédiaire du calculateur 5 servant donc également de calculateur de freinage.A cette fin, le calculateur reçoit un signal électrique qu'un capteur de pédale 18, réalisé sous forme d'un potentiomètre, a engendré en fonction de la position de la pédale 17.

Selon la présente invention, la source dé liquide sous pression pour le freinage de chaque roue est constituée par le liquide sous pression 11 contenu dans l'élément de suspension associé à cette roue. A cette fin, l'étrier de frein 16 est relié au cylindre 11 par une canalisation 19 sur laquelle est montée une électrovanne d'admission 20 qui est commandée par le calculateur de suspension et de freinage 5. L'étrier de frein 16 est en outre relié par une canalisation de retour de fluide 21 au réservoir 2, par l'intermédiaire d'une électrovanne d'échappement 22 également commandée par le calculateur 5.

L'électrovanne d'admission 20 est de préférence plus proche de l'étrier 16 que de l'élément de suspension 11. Elle pourrait même être intégrée à l'étrier de frein. Le système de commande est avantageusement agencé pour que l'électrovanne soit en permanence au moins partiellement ouverte. Pour avoir une redondance de fonctionnement, on pourrait prévoir deux électrovannes.

Le système de freinage selon l'invention peut être pourvu de moyens de secours indiqués en traits interrompus sur la figure. Ces moyens de secours comprennent un maître-cylindre 24 relié à l'étrier de frein avec interposition d'une électrovanne de secours 25 qui est normalement ouverte, et reliée au réservoir 2 quand le système selon l'invention fonctionne. Une des solutions est que le maître-cylindre ne soit actionné que pour une course importante de la pédale.

On notera que, comme indiqué ci-dessus, lorsque le système de l'invention fonctionne, l'électrovanne de secours 25 n'est pas fermée, mais reliée au réservoir 2 car sinon, on se heurterait à un véritable "mur" pour des courses importantes de la pédale (le maître-cylindre étant alors actionné), le liquide ne pouvant s'échapper du maître-cylindre.

Il est encore à noter qu'un capteur de vitesse 27 est associé à chaque roue et envoie ses informations au calculateur 5. Ce calculateur et les électrovannes peuvent encore être utilisés pour le système anti-blocage de roue (ABS) ainsi que pour la suspension.

Le système selon l'invention présente de nombreux avantages. Ainsi la gestion du freinage est réalisée roue par roue, à l'aide de quatre circuits de freinage indépendants, ce qui procure une amélioration de la sécurité du système par rapport aux systèmes connus qui ne disposent que de deux circuits de freinage séparés. Etant donné que l'étrier de frein associé à une roue est alimenté en liquide de freinage par l'élément de suspension de cette même roue, le temps de réponse dans le cas d'un freinage est amélioré par réduction des pertes de charges et du nombre des composants frein/suspension. L'invention permet en outre une réduction du nombre des canalisations à une par roue au lieu de cinq dans les systèmes actuels, dont un flexible dans le passage de roue. Pour le retour du liquide au réservoir, un simple tube entre l'étrier et le réservoir suffit. Tous les flexibles dans les passages de roue peuvent être supprimés. L'autre avantage réside dans la possibilité d'utiliser le même calculateur pour la suspension, le freinage et le système ABS. L'invention permet également un freinage piloté pour les fonctions de régulateur de vitesse intelligent, pour les arrêts de sécurité par détection radar, pour l'aide au démarrage en côte et pour un dispositif antivol. De plus, l'électrovanne d'admission pourrait être normalement ouverte pour des raisons de sécurité de fonctionnement ou même normalement partiellement ouverte pour assurer une pression dans les freins correspondant à une décélération de l'ordre de 0,5 g.

## Revendications

1. Véhicule automobile comprenant un système de freinage et une suspension hydropneumatique comprenant, pour chaque roue, un élément de suspension du type à cylindre et piston, contenant un volume de liquide de suspension et susceptible de communiquer avec une source de liquide de suspension par l'intermédiaire d'électrovannes commandées par des moyens calculateurs, le système de freinage comportant une pédale de frein et un étrier de frein associé à chaque roue et adapté pour recevoir du liquide de freinage d'une source de liquide de freinage, sous la commande de la pédale de frein, **caractérisé en ce que** la source de liquide de freinage d'une roue est constituée par le liquide (11) sous pression contenu dans l'élément de suspension (8) associé à cette roue, et **en ce que** l'étrier de frein (16) d'une roue du véhicule est relié par une canalisation (19) à l'élément de suspension (8) associé à cette roue par l'intermédiaire d'au moins une électrovanne (20) commandée par les moyens calculateurs (5) de manière que l'électrovanne (20) soit normalement et en permanence au moins partiellement ouverte.

2. Véhicule selon la revendication 1, **caractérisé en ce que** l'électrovanne (20) est plus proche de l'étrier de frein (16) que de l'élément de suspension (8).

3. Véhicule selon la revendication 2, **caractérisé en ce que** l'électrovanne (20) est intégrée à l'étrier de frein (16) .

4. Véhicule selon l'une des revendications 1 à 3, **caractérisé en ce qu'**un capteur de position (18) est associé à la pédale de frein (17) et adapté pour convertir la position de la pédale en un signal électrique envoyé au calculateur (5) pour la commande des électrovannes.

5. Véhicule selon l'une des revendications 1 à 4, **caractérisé en ce que** le calculateur (5) et les électrovannes (20, 22) sont utilisables pour un système anti-blocage de roue et/ou pour la suspension.

6. Véhicule selon l'une des revendications 1 à 5, **caractérisé en ce qu'**il comporte deux électrovannes (20) pour réaliser une redondance de fonctionnement.

7. Véhicule selon l'une des revendications 1 à 6, **caractérisé en ce qu'**il comporte des moyens de freinage de secours en cas de défaillance.

8. Véhicule selon la revendication 7, **caractérisé en ce que** les moyens de secours comprennent un maître-cylindre (24) relié à l'étrier de frein (16), avec interposition d'une électrovanne de secours (25).

## Patentansprüche

1. Kraftfahrzeug mit einem Bremssystem und einer hydropneumatischen Radaufhängung, die für jedes Rad ein Aufhängungselement vom Typ mit Zylinder und Kolben aufweist, das ein Aufhängungsflüssigkeitsvolumen enthält und mit einer Aufhängungsflüssigkeitsquelle über Elektroventile in Verbindung steht, die über Rechenmittel gesteuert werden, wobei das Bremssystem ein Bremspedal und eine Bremsgabel enthält, die jedem Rad zugeordnet ist und zum bremspedalgesteuerten Aufnehmen der Bremsflüssigkeit von einer Bremsflüssigkeitsquelle ausgelegt ist, **dadurch gekennzeichnet, dass** die Bremsflüssigkeitsquelle eines Rads aus der Druckflüssigkeit (11) besteht, die im diesem Rad zugeordneten Aufhängungselement (8) enthalten ist, und dass die Bremsgabel (16) eines Rads des Fahrzeugs über eine Leitung (19) mit dem diesem Rad zugeordneten Aufhängungselement (8) unter Zwischenschaltung zumindest eines Elektroventils (20) verbunden ist, das über Rechenmittel (5) so gesteuert wird, dass das Elektroventil (20) normalerweise stets zumindest teilweise geöffnet ist.

2. Fahrzeug nach Anspruch 1, **dadurch gekennzeichnet, dass** das Elektroventil (20) der Bremsgabel (16) näher liegt als dem Aufhängungselement (8).

3. Fahrzeug nach Anspruch 2, **dadurch gekennzeichnet, dass** das Elektroventil (20) in der Bremsgabel (16) integriert ist.

4. Fahrzeug nach einem der Ansprüche 1 bis 3, **dadurch gekennzeichnet, dass** dem Bremspedal (17) ein Lagesensor (18) zugeordnet ist, der dazu ausgelegt ist, die Lage des Pedals in ein elektrisches Signal umzuwandeln, das dem Rechner (5) zum Steuern der Elektroventile zugeführt wird.

5. Fahrzeug nach einem der Ansprüche 1 bis 4, **dadurch gekennzeichnet, dass** der Rechner (5) und die Elektroventile (20, 22) bei einem Rad-Antiblockiersystem und/oder bei der Radaufhängung verwendbar sind.

6. Fahrzeug nach einem der Ansprüche 1 bis 5, **dadurch gekennzeichnet, dass** es zwei Elektroventile (20) enthält, um eine Funktionsredundanz zu gewährleisten.

7. Fahrzeug nach einem der Ansprüche 1 bis 6, **dadurch gekennzeichnet, dass** es Mittel für eine Notbremsung bei Ausfall enthält.

8. Fahrzeug nach Anspruch 7, **dadurch gekennzeichnet, dass** die Notbremsmittel einen Hauptzylinder (24) enthalten, der unter Zwischenschaltung eines Notelektroventils (25) mit der Bremsgabel (16) verbunden ist.

## Claims

1. Motor vehicle comprising a braking system and a hydropneumatic suspension comprising, for each wheel, a suspension element of the type having a cylinder and piston, containing a volume of suspension fluid and capable of communicating with a source of suspension fluid by way of solenoid valves controlled by computing means, the braking system comprising a brake pedal and a brake calliper which is associated with each wheel and designed to receive brake fluid from a brake fluid source under the control of the brake pedal, **characterized in that** the brake fluid source for a wheel is formed by the pressurized fluid (11) contained in the suspension element (8) associated with this wheel, and **in that** the brake calliper (16) of a wheel of the vehicle is connected by a duct (19) to the suspension element (8) associated with this wheel by way of at least one solenoid valve (20) controlled by the computing means (5) in such a way that the solenoid valve (20) is normally and permanently at least partially open.

2. Vehicle according to Claim 1, **characterized in that** the solenoid valve (20) is closer to the brake calliper (16) than to the suspension element (8).

3. Vehicle according to Claim 2, **characterized in that** the solenoid valve (20) is integrated with the brake calliper (16).

4. Vehicle according to one of Claims 1 to 3, **characterized in that** a position sensor (18) is associated with the brake pedal (17) and designed to convert the position of the pedal into an electrical signal sent to the computer (5) for controlling the solenoid valves.

5. Vehicle according to one of Claims 1 to 4, **characterized in that** the computer (5) and the solenoid valves (20, 22) can be used for a wheel anti-lock system and/or for the suspension.

6. Vehicle according to one of Claims 1 to 5, **characterized in that** it comprises two solenoid valves (20) in order to provide operational redundancy.

7. Vehicle according to one of Claims 1 to 6, **characterized in that** it comprises safety means for safe braking in the event of failure.

8. Vehicle according to Claim 7, **characterized in that** the safety means comprise a master cylinder (24) connected to the brake calliper (16), with a safety solenoid valve (25) being placed in between.
